# EUROPEAN PATENT APPLICATION

(11) **EP 4 819 631 A2**
(43) Date of publication of application: **07.10.2026**
(21) Application number: 26191947.6
(22) Date of filing: 15.05.2023
(51) Int. Cl.: H04N 23/63

(54) **IMAGE DISPLAY METHOD, DEVICE, ELECTRONIC EDEVICE AND STORAGE MEDIUM**

(30) Priority: 19.05.2022 CN 202210546991
(62) Document number(s) of the earlier application(s) in accordance with Art. 76 EPC: 23806881.1 / 4 528 459
(71) Applicant: Arashi Vision Inc., Shenzhen, Guangdong 518000 (CN)
(72) Inventor: LIN, Dahao, Shenzhen, Guangdong, 518000 (CN)
(74) Representative: Michalski Hüttermann & Partner mbB

(57) **Abstract**

Embodiments of the present application disclose an image display method, a device, an electronic device and a storage medium. The method includes: controlling the device to acquire panoramic image data and display a default image corresponding to a default direction according to the panoramic image data; determining a target direction corresponding to a target image in response to a direction selection operation corresponding to the target image; determining a target image in the panoramic image data according to the target direction; and displaying the target image on a display area. This allows a user to preview the images corresponding to multiple directions at the same time when previewing the panoramic image data, thereby improving image preview efficiency.

## Description

### TECHNICAL OF FIELD

The present application relates to the field of image processing technology, and in particular to an image display method, device, electronic device and storage medium.

### BACKGROUND

In the related art, when a user uses a camera of an unmanned aerial vehicle (UAV) to capture images, only a preview image in a single direction can often be displayed. When the user needs to view a preview image in another direction, the UAV camera needs to be controlled to capture an image in the another direction.

### SUMMARY

Some embodiments of the present application provide an image display method, device, electronic device and storage medium. The image display method can display images in multiple directions at the same time, thereby improving image preview efficiency.

In a first aspect, an embodiment of the present application provides an image display method, comprising:
acquire panoramic image data, and displaying a default image corresponding to a default direction according to the panoramic image data;
in response to a direction selection operation corresponding to a target image, determining a target direction corresponding to the target image;
determining the target image in the panoramic image data according to the target direction; and
displaying the target image on a display area.

In a second aspect, an embodiment of the present application provides an image display device, including:
an acquisition module, configured to acquire panoramic image data, and display a default image corresponding to a default direction according to the panoramic image data;
a first determination module, configured to determine a target direction corresponding to the target image in response to a direction selection operation corresponding to the target image;
a second determination module, configured to determine a target image in the panoramic image data according to a target direction; and
a display module, configured to display the target image on the display area.

In a third aspect, an embodiment of the present application provides an electronic device, comprising a memory storing executable program code and a processor coupled to the memory; the processor calls the executable program code stored in the memory to execute the steps in the image display method provided in the embodiment of the present application.

In a fourth aspect, an embodiment of the present application provides a storage medium, which stores a plurality of instructions, and the instructions are suitable for loading by a processor to execute the steps in the image display method provided in the embodiment of the present application.

In one embodiment of the present application, the control device acquires panoramic image data, displays a default image corresponding to a default direction according to the panoramic image data, determines a target direction corresponding to the target image in response to a direction selection operation corresponding to the target image, determines a target image in the panoramic image data according to the target direction, and displays the target image on the display area. This allows the user to preview the images corresponding to multiple directions at the same time when previewing the panoramic image data, thereby improving image preview efficiency.

### BRIEF DESCRIPTION OF THE DRAWINGS

In order to more clearly illustrate the technical solutions in the embodiments of the present disclosure, the accompanying drawings to be used in the embodiments will be briefly introduced below, and it will be obvious that the accompanying drawings in the following description are only some of the embodiments of the present disclosure, and that for the person of ordinary skill in the field, other accompanying drawings can be obtained based on these drawings, without giving creative labor.
FIG. 1 is a schematic diagram of an application scenario of aa image display method provided in an embodiment of the present application.
FIG. 2 is a schematic diagram of a first flow chart of an image display method provided in an embodiment of the present application.
FIG. 3 is a second flow chart of the image display method provided in an embodiment of the present application.
FIG. 4 is a schematic diagram of a three-dimensional space provided in an embodiment of the present application.
FIG. 5 is a schematic diagram of a structure of an image display device provided in an embodiment of the present application.
FIG. 6 is a schematic diagram of a structure of an electronic device provided in an embodiment of the present application.

### DETAILED DESCRIPTION

In order to make the purpose, technical solution and advantages of the present disclosure more clearly understood, the present disclosure is described in further detail hereinafter in conjunction with the accompanying drawings and embodiments. It should be understood that the specific embodiments described herein are only for explaining the present disclosure and are not intended to limit the present disclosure.

The following will be combined with the drawings in some embodiments of the present application to clearly and completely describe the technical solutions in some embodiments of the present application. Obviously, the described embodiments are only part of the embodiments of the present application, not all of the embodiments. Based on some embodiments in the present application, all other embodiments obtained by those skilled in the art without creative work are within the scope of protection of this application.

In the related art, when an UAV acquires images through a camera, when the user previews images through another electronic device, the preview image only in a single direction can be displayed. When the user needs to view the preview image in another direction, the UAV camera needs to be controlled to shoot the image in the another direction. The user cannot preview the images in multiple directions at the same time, and the entire image preview process is relatively complicated.

In order to solve the above technical problems, some embodiments of the present application provide an image display method, device, electronic device and storage medium. The image display method can be applied to VR (Virtual Reality) glasses, and can also be applied to various electronic devices such as smart phones and computers.

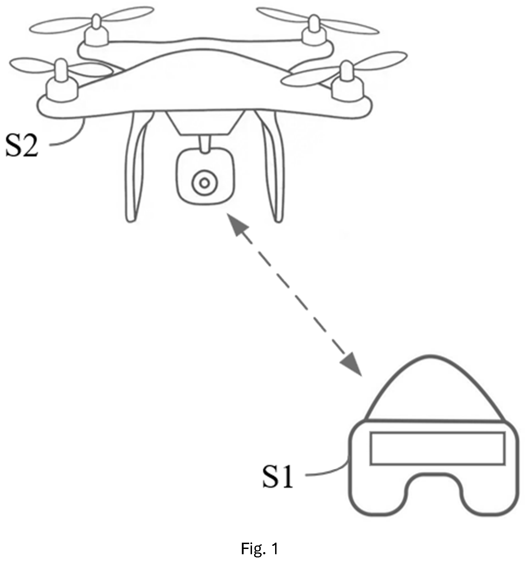

Please refer to FIG. 1, which is a schematic diagram of an application scenario of the image display method provided in an embodiment of the present application.

As shown in Fig. 1, S1 is a control device, S2 is a recording device, the control device may be a pair of VR glasses, the recording device may be an UAV, and a 360-degree panoramic camera is provided on the recording device, which can capture panoramic images in a three-dimensional space.

It should be noted that the control device may also be a mobile phone, a computer or other electronic device with computing capabilities. The recording device may also be an electronic device such as a panoramic camera. The UAV and VR glasses shown in FIG.1 are merely examples and should not be regarded as limiting the present application.

After the recording device acquires the panoramic image data, the recording device sends the panoramic image data to the control device through wireless communication. After the control device receives the panoramic image data, the control device displays a default image corresponding to a default direction according to the panoramic image data, then determines a target direction in response to a direction selection operation, and then determines a target image corresponding to the target direction according to the panoramic image data, and finally displays the target image in a superimposed manner on the display area.

That is to say, in one embodiment of the present application, the control device determines the target image corresponding to the target direction in the panoramic image data through the target direction selected by the user, and then displays the default image and the target image at the same time, so that the user can preview the images corresponding to the default direction and the target direction respectively at the same time, thereby improving efficiency of image preview.

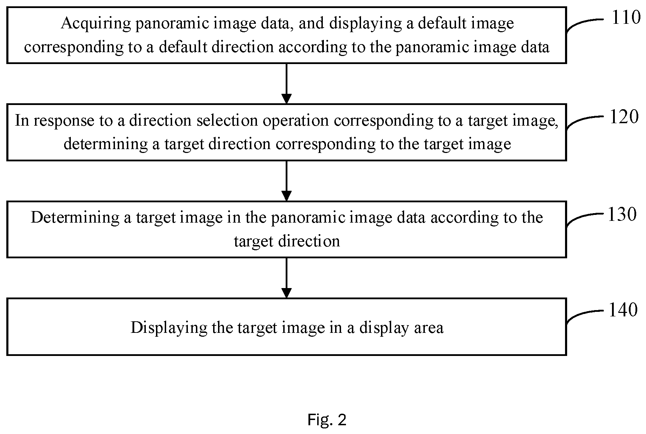

For a more detailed understanding of the image display method provided in one embodiment of the present application, please refer to FIG. 2, which is a schematic diagram of the first process of the image display method provided in one embodiment of the present application. The image display method may include the following steps:
110. Acquiring panoramic image data, and displaying a default image corresponding to a default direction according to the panoramic image data.

In some implementations, the control device may first establish wireless communication with the recording device, and then send a data acquisition instruction to the recording device. After the recording device receives the data acquisition instruction, it may send initial data to the control device via wireless communication.

The control device can decode the initial data according to the decoding method corresponding to the initial data, so as to obtain panoramic image data, which includes panoramic image data in a three-dimensional space, and the panoramic image data also includes spatial angle information corresponding to when the recording device collects the panoramic image data, such as spatial angle information including direction information, Euler angle information, etc. Among them, the Euler angle is a set of three independent angular parameters used to uniquely determine a position of a fixed-point rotating rigid body, which is composed of a nutation angle θ, a precession angle ψ, and a rotation angle φ.

It should be noted that when the recording device collects panoramic image data in a real stereoscopic space, the recording device has a corresponding default direction, such as the flight direction of the recording device. The default direction may also be a direction pre-specified by the user, such as a true north direction specified by the user.

The control device can parse the corresponding default direction in the panoramic image data, then obtain the default image corresponding to the default direction in the panoramic image data, and display the default image. For example, the default image is the image directly in front of the recording device when it is flying, and then the control device displays the default image in its corresponding image display area, thereby realizing a preview of the default image. For example, the default image is displayed in full image, so that the user can view the default image more clearly.

120. In response to a direction selection operation corresponding to a target image, determining a target direction corresponding to the target image.

In some embodiments, when the user is previewing the default image, the user also needs to view the images corresponding to other directions. For example, the user selects an image in one direction as the target image. At this time, the electronic device can obtain the user's input direction selection operation for the target image, and then respond to the input direction selection operation to determine the target direction corresponding to the target image.

For example, the user inputs a direction selection operation through a handle or a virtual controller. At this time, the electronic device can generate direction vector data corresponding to the direction selection operation. The direction vector data can be three-dimensional direction vector data. For example, the direction vector data is (x, y, z), where x, y, and z are three mutually perpendicular vectors, thereby constituting the direction vector data .

In some implementations, the electronic device may convert the direction vector data into Euler angle data, and then determine the target direction according to the Euler angle data.

For example, the control device may determine a virtual center point of the space, and then establish a three-dimensional space based on the center point of the space. The three-dimensional space is virtual, and then Euler angle data is input into the three-dimensional space to determine the target direction.

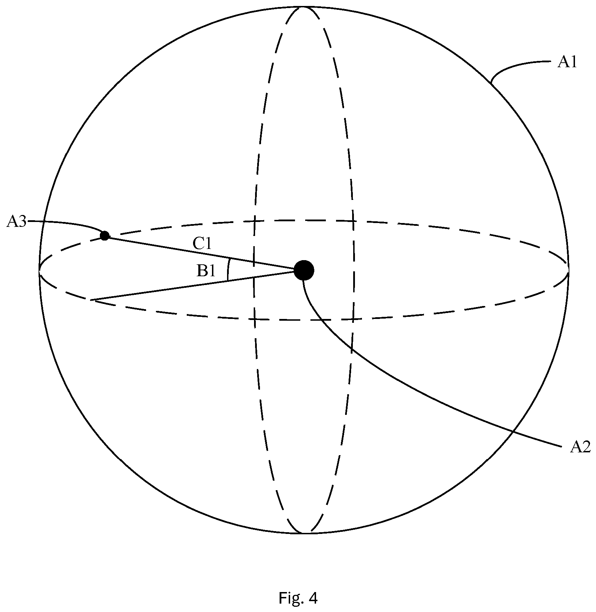

Please refer to FIG. 4 for details. FIG. 4 is a schematic diagram of a three-dimensional space provided in an embodiment of the present application.

As shown in FIG. 4, the control device takes A2 as the center point of the space, thereby establishing a three-dimensional space A1, wherein the three-dimensional space A1 can be understood as a spherical space. The center point A2 of the space can be understood as a recording device corresponding to the panoramic image data, i.e., a recording device. The three-dimensional space A1 corresponds to a real stereoscopic space.

The control device then determines the target direction in three-dimensional space based on the Euler angle data.

130. Determining a target image in the panoramic image data according to the target direction.

In some implementations, the electronic device may map the panoramic image data in a three-dimensional space to obtain a panoramic three-dimensional space including a panoramic image, and then determine a target image in the panoramic three-dimensional space according to the target direction.

For example, the control device can take the center point of the space as the center, and then determine the default direction corresponding to the recording device in the three-dimensional space, and then use the default direction as the standard direction to map the panoramic image data of each frame in the three-dimensional space, thereby obtaining a panoramic three-dimensional space containing a panoramic image. The position of the center point of the space in the three-dimensional space corresponds to the position of the recording device that shoots the panoramic image data in the real three-dimensional space.

In some embodiments, the control device can determine a viewing angle and a viewing distance corresponding to the target direction, and then cut out a cropped image from the panoramic image of the panoramic three-dimensional space according to the viewing angle and viewing distance, and finally project the cropped image to obtain the target image .

As shown in Fig. 4, B1 is a visual angle corresponding to the target direction, and a straight-line distance between the spatial center point A2 and the spatial point A3 is the visual distance C1. After determining the visual distance and the visual angle, the control device can cut out a cropped image from the panoramic image corresponding to the panoramic three-dimensional space, and then obtain the target image through spatial projection.

The cropped image can be understood as a three-dimensional image, and after spatial projection, a two-dimensional target image is obtained.

140. Displaying the target image in a display area.

In some ways, after obtaining the target image, the control device may determine a display position corresponding to the target image, and then display the target image on the display area according to the display position.

Specifically, the control device may obtain a relative position of the target image with respect to the default image, and determine the display position corresponding to the target image based on the default image according to the relative position.

For example, if the target image is on the left side of the default image, the display position of the target image is determined to be on the left side of the default image. If the target image is on the right side of the default image, the display position of the target image is determined to be on the right side of the default image.

In some implementations, the target image may be displayed superimposed on the default image, for example, the default image is displayed in full image, and the target image is displayed in a small window on the default image, thereby simultaneously controlling the device to display both the default image and the target image.

In some implementations, the control device determines a size of the display area corresponding to the target image according to the visual distance corresponding to the target image, for example, when the visual distance of the target image is larger, the display area corresponding to the target image is larger. The display area of the target image is smaller than the display area of the default image.

In one embodiment of the present application, the control device acquires panoramic image data, displays a default image corresponding to a default direction according to the panoramic image data, determines a target direction corresponding to the target image in response to a direction selection operation corresponding to the target image, determines a target image in the panoramic image data according to the target direction, and displays the target image on the display area. This allows the user to preview the images corresponding to multiple directions at the same time when previewing the panoramic image data, thereby improving image preview efficiency.

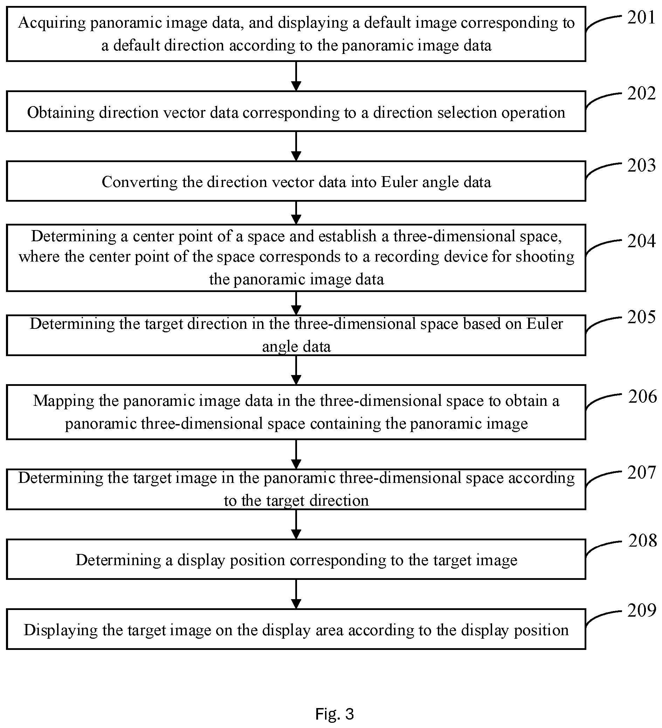

Please continue to refer to Fig. 3, which is a second flow chart of the image display method provided by an embodiment of the present application. The image display method may include the following steps:

201. Acquiring panoramic image data, and displaying a default image corresponding to a default direction according to the panoramic image data.

In some implementations, the control device may first establish wireless communication with the recording device, and then send a data acquisition instruction to the recording device. After the recording device receives the data acquisition instruction, it may send initial data to the control device via wireless communication.

The control device can decode the initial data according to the decoding method corresponding to the initial data, so as to obtain panoramic image data. The panoramic image data includes panoramic image data in a three-dimensional space. The panoramic image data also includes spatial angle information corresponding to when the recording device collects the panoramic image data. For example, the spatial angle information includes direction information, Euler angle information, etc.

It should be noted that when the recording device collects panoramic image data in a three-dimensional space, the recording device has a corresponding default direction, for example, the default direction is the flight direction of the recording device.

The control device can parse the corresponding default direction in the panoramic image data, then obtain the default image corresponding to the default direction, and display the default image. For example, the default image is the image directly in front of the recording device when it is flying, and then the control device displays the default image in its corresponding image display area, thereby realizing a preview of the default image. For example, the default image is displayed in full image, so that the user can watch the default image more clearly.

In some embodiments, after the control device acquires the panoramic image data, the control device can determine the spatial angle information in the panoramic image data, and then determine a default direction in the spatial angle information, such as the default direction is north, and then the default viewing angle and default viewing distance corresponding to the default direction, and finally determine the default image corresponding to the default direction in the panoramic image data based on the default viewing angle and the default viewing distance.

202. Obtaining direction vector data corresponding to a direction selection operation.

In some embodiments, when the user is previewing the default image, the user also needs to watch images corresponding to other directions. At this time, the electronic device can obtain the user's input direction selection operation, and then determine a direction vector data corresponding to the direction selection operation in response to the input direction selection operation .

For example, the user inputs a direction selection operation through a handle or a virtual controller. At this time, the electronic device can generate direction vector data corresponding to the direction selection operation. The direction vector data can be three-dimensional direction vector data. For example, the direction vector data is (x, y, z), where x, y, and z are three mutually perpendicular vectors, thereby constituting the direction vector data.

In some implementations, the user may also input corresponding parameters on the image to implement the direction selection operation, such as inputting parameters corresponding to the direction vector data to implement the direction selection operation.

203. Converting the direction vector data into Euler angle data.

The control device can convert the direction vector data into Euler angle data through a corresponding formula.

204. Determining a center point of a space and establish a three-dimensional space, where the center point of the space corresponds to a recording device for shooting the panoramic image data.

Please refer to FIG. 4, the control device takes A2 as the center point of the space, thereby establishing a three-dimensional space A1, wherein the three-dimensional space A1 can be understood as a spherical space. The center point A2 of the space can be understood as a recording device corresponding to the panoramic image data. The three-dimensional space A1 corresponds to a real stereoscopic space. The three-dimensional space A1 can be a sphere.

205. Determining the target direction in the three-dimensional space based on Euler angle data.

In some implementations, the control device may input Euler angle data into a three-dimensional space to determine a corresponding target direction.

206. Mapping the panoramic image data in the three-dimensional space to obtain a panoramic three-dimensional space containing the panoramic image.

For example, the control device can be centered on the center point of the space, and then determine the default direction corresponding to the recording device in the three-dimensional space, and then use the default direction as the standard direction to map the panoramic image data of each frame in the three-dimensional space, thereby obtaining a panoramic three-dimensional space containing a panoramic image.

207. Determining the target image in the panoramic three-dimensional space according to the target direction.

In some embodiments, the control device can determine a viewing angle and a viewing distance corresponding to the target direction, and then cut out a cropped image from the panoramic image of the panoramic three-dimensional space according to the viewing angle and viewing distance, and finally project the cropped image to obtain the target image .

As shown in Fig. 4, B1 is the visual angle corresponding to the target direction, and the straight-line distance between the spatial center point A2 and the spatial point A3 is the visual distance C1. After determining the visual distance and the visual angle, the control device can cut out a cropped image from the panoramic image corresponding to the panoramic three-dimensional space, and then obtain the target image through spatial projection.

The cropped image can be understood as a three-dimensional image, and after spatial projection, a two-dimensional target image is obtained.

208. Determining a display position corresponding to the target image.

The control device may obtain a relative position of the target image relative to the default image, and determine the display position corresponding to the target image on the default image according to the relative position.

For example, if the target image is on the left side of the default image, the display position of the target image is determined to be on the left side of the default image. If the target image is on the right side of the default image, the display position of the target image is determined to be on the right side of the default image.

For another example, a plane where the corresponding flight direction (default direction) of the recording device is located is determined as the standard plane, and then the relative position of the target image and the default image is determined in the standard plane, and then the relative position is determined as the corresponding display position on the display plane.

209. Displaying the target image on the display area according to the display position.

In some implementations, the target image may be displayed superimposed on the default image, for example, the default image is displayed in full image, and the target image is displayed in a small window on the default image, thereby simultaneously controlling the device to display both the default image and the target image.

In some implementations, the control device determines a size of the display area corresponding to the target image according to the visual distance corresponding to the target image. For example, when the visual distance of the target image is larger, the display area corresponding to the target image is larger. The display area of the target image is smaller than the display area of the default image.

In some embodiments, the control device may further divide the entire display plane into two independent display areas, one of which displays a default image and the other displays a target image. This enables the corresponding images in multiple directions to be displayed simultaneously, allowing the user to preview multiple images. This improves the image preview efficiency.

It should be noted that, in one embodiment of the present application, the default image and the target image displayed by the control device may be an image or a video.

In an embodiment of the present application, the control device obtains panoramic image data and displays a default image corresponding to a default direction based on the panoramic image data. Then, the direction vector data corresponding to the direction selection operation is obtained, and the direction vector data is converted into Euler angle data. Then, the center point of the space is determined and a three-dimensional space is established, and the target direction is determined in the three-dimensional space based on the Euler angle data. The panoramic image data is then mapped in the three-dimensional space to obtain a panoramic three-dimensional space containing a panoramic image, and the target image is determined in the panoramic three-dimensional space based on the target direction. Finally, the display position corresponding to the target image is determined, and the target image is displayed on the display area based on the display position.

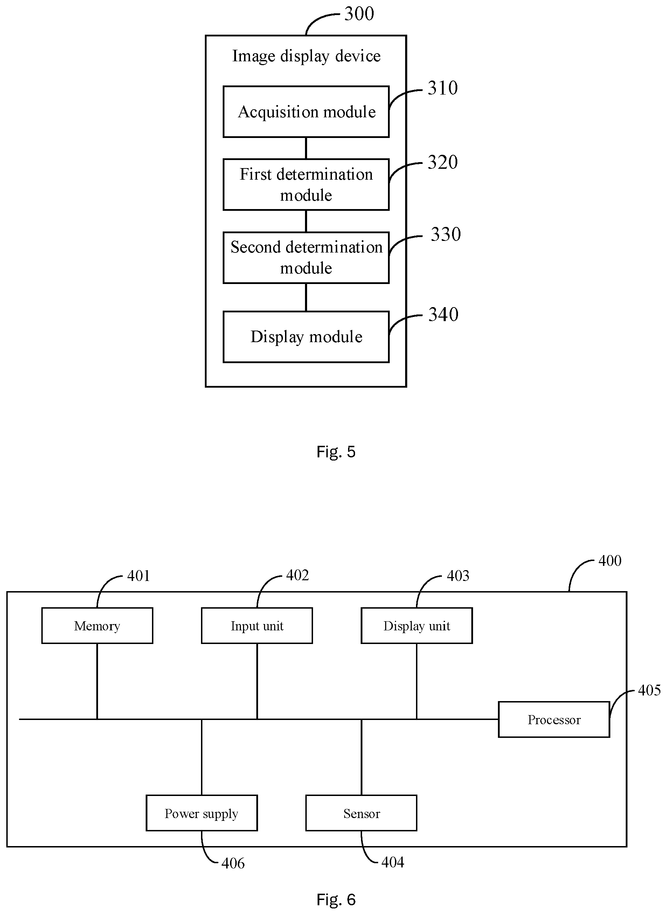

Please refer to FIG. 5, which is a schematic diagram of a structure of an image display device provided in an embodiment of the present application. The image display device 300 may include:
an acquisition module 310 configured to acquire panoramic image data and display a default image corresponding to a default direction according to the panoramic image data; and
a first determination module 320 configured to determine a target direction in response to a direction selection operation;
wherein the first determination module 320 is further configured to obtain direction vector data corresponding to the direction selection operation; convert the direction vector data into Euler angle data; and determine the target direction according to the Euler angle data;
wherein the first determination module 320 is also configured to determine a center point of the space and establish a three-dimensional space, the position of the center point of the space in the three-dimensional space corresponding to the position of the recording device that shoots the panoramic image data in the real three-dimensional space; and determine the target direction in the three-dimensional space according to the Euler angle data;
a second determination module 330 configured to determine the target image in the panoramic image data according to the target direction,
wherein the second determination module 330 is further configured to map the panoramic image data in a three-dimensional space to obtain a panoramic three-dimensional space containing a panoramic image; and to determine the target image in the panoramic three-dimensional space according to the target direction;
wherein the second determination module 330 is further configured to determine a viewing angle and a viewing distance corresponding to the target direction; cut out a cropped image from the panoramic image in the panoramic three-dimensional space according to the viewing angle and viewing distance; and project the cropped image to obtain the target image;
a display module 340 configured to display the target image in the display area,
wherein the display module 340 is further configured to determine a display position corresponding to the target image; and to superimpose and display the target image on the display area according to the display position;
wherein the display module 340 is further configured to obtain a relative position of the target image relative to the default image; and determine the display position corresponding to the target image on the default image according to the relative position.

In one embodiment of the present application, the control device acquires panoramic image data, displays a default image corresponding to a default direction according to the panoramic image data, determines a target direction corresponding to the target image in response to a direction selection operation corresponding to the target image, determines a target image in the panoramic image data according to the target direction, and displays the target image on the display area. This allows the user to preview the images corresponding to multiple directions at the same time when previewing the panoramic image data, thereby improving image preview efficiency.

Accordingly, an embodiment of the present application further provides an electronic device, as shown in FIG. 6, the electronic device may include a memory 401 having one or more computer-readable storage media, an input unit 402, a display unit 403, a sensor 404, a processor 405 having one or more processing cores, and a power supply 406. Those skilled in the art will appreciate that the electronic device structure shown in FIG. 6 does not constitute a limitation on the electronic device, and may include more or fewer components than shown, or combine certain components, or arrange components differently. Among them:

The memory 401 can be used to store software programs and modules, and the processor 405 executes various functional applications and data processing by running the software programs and modules stored in the memory 401. The memory 401 may mainly include a program storage area and a data storage area, wherein the program storage area may store an operating system, an application required for at least one function (such as a sound playback function, an image playback function, etc.), etc.; the data storage area may store data created according to the use of the electronic device (such as audio data, a phone book, etc.), etc. In addition, the memory 401 may include a high-speed random access memory, and may also include a non-volatile memory, such as at least one disk storage device, a flash memory device, or other volatile solid-state storage devices. Accordingly, the memory 401 may also include a memory controller to provide the processor 405 and the input unit 402 with access to the memory 401.

The input unit 402 can be used to receive input digital or character information, and generate keyboard, mouse, joystick, optical or trackball signal input related to user settings and function control. Specifically, in a specific embodiment, the input unit 402 may include a touch-sensitive surface and other input devices. The touch-sensitive surface, also known as a touch display image or a touch pad, can collect the user's touch operations on or near it (such as the user's operation on or near the touch-sensitive surface using any suitable object or accessory such as a finger, a stylus, etc.), and drive the corresponding connection device according to a pre-set program. Optionally, the touch-sensitive surface may include a touch detection device and a touch controller. Among them, the touch detection device detects the user's touch orientation, detects a signal brought by the touch operation, and transmits the signal to the touch controller; the touch controller receives the touch information from the touch detection device, converts it into the touch point coordinates, and then sends it to the processor 405, and can receive and execute the command sent by the processor 405. In addition, the touch-sensitive surface can be implemented using multiple types such as resistive, capacitive, infrared and surface acoustic wave. In addition to the touch-sensitive surface, the input unit 402 may also include other input devices. Specifically, other input devices may include, but are not limited to, one or more of a physical keyboard, function keys (such as a volume control key, a switch key, etc.), a trackball, a mouse, a joystick, and the like.

The display unit 403 can be used to display information input by the user or information provided to the user and various graphical user interfaces of the electronic device, which can be composed of graphics, text, icons, videos and any combination thereof. The display unit 403 may include a display panel. Optionally, the display panel may be configured in the form of a liquid crystal display (LCD), an organic light-emitting diode (OLED), etc. Further, the touch-sensitive surface may cover the display panel. When the touch-sensitive surface detects a touch operation on or near it, it is transmitted to the processor 405 to determine the type of touch event, and then the processor 405 provides corresponding visual output on the display panel according to the type of touch event. Although in FIG. 6, the touch-sensitive surface and the display panel are implemented as two independent components to implement input and output functions, in some embodiments, the touch-sensitive surface and the display panel can be integrated to implement input and output functions.

The electronic device may also include at least one sensor 404, such as a light sensor, a motion sensor, and other sensors. Specifically, the light sensor may include an ambient light sensor and a proximity sensor, wherein the ambient light sensor may adjust the brightness of the display panel according to the brightness of the ambient light, and the proximity sensor may turn off the display panel and/or backlight when the electronic device is moved to the ear. As a type of motion sensor, the gravity acceleration sensor can detect the magnitude of acceleration in each direction (generally three axes), and can detect the magnitude and direction of gravity when stationary. It can be used for applications that identify the posture of electronic devices (such as horizontal and vertical image switching, related games, magnetometer posture calibration), vibration recognition related functions (such as pedometers, tapping), etc.; As for other sensors that can be configured in electronic devices, such as gyroscopes, barometers, hygrometers, thermometers, infrared sensors, etc., they will not be repeated here.

The processor 405 is the control center of the electronic device. It uses various interfaces and lines to connect various parts of the entire electronic device. By running or executing software programs and/or modules stored in the memory 401, and calling data stored in the memory 401, it performs various functions of the electronic device and processes data, thereby monitoring the electronic device as a whole. Optionally, the processor 405 may include one or more processing cores; preferably, the processor 405 may integrate an application processor and a modem processor, wherein the application processor mainly processes the operating system, user interface, and application programs, and the modem processor mainly processes wireless communications. It is understandable that the above-mentioned modem processor may not be integrated into the processor 405.

The electronic device also includes a power supply 406 (such as a battery) for supplying power to various components. Preferably, the power supply can be logically connected to the processor 405 through a power management system, so that the power management system can manage charging, discharging, power consumption management and other functions. The power supply 406 can also include one or more DC or AC power supplies, recharging systems, power failure detection circuits, power converters or inverters, power status indicators and other arbitrary components.

Although not shown, the electronic device may also include a camera, a Bluetooth module, etc., which will not be described in detail here. Specifically in this embodiment, the processor 405 in the electronic device loads the computer program stored in the memory 401, and the processor 405 loads the computer program to achieve various functions:
acquiring panoramic image data, and displaying a default image corresponding to a default direction according to the panoramic image data;
in response to a direction selection operation corresponding to a target image, determining a target direction corresponding to the target image;
determining the target image in the panoramic image data according to the target direction; and
displaying the target image on the display area.

A person of ordinary skill in the art will appreciate that all or part of the steps in the various methods of the above embodiments may be completed by instructions, or by controlling related hardware through instructions. The instructions may be stored in a computer-readable storage medium and loaded and executed by a processor.

To this end, an embodiment of the present application provides a computer-readable storage medium, in which a plurality of instructions are stored, and the instructions can be loaded by a processor to execute the steps in any image display method provided in the embodiment of the present application. For example, the instructions can execute the following steps:
acquiring panoramic image data, and displaying a default image corresponding to a default direction according to the panoramic image data;
in response to a direction selection operation corresponding to a target image, determining a target direction corresponding to the target image;
determine the target image in the panoramic image data according to the target direction; and
displaying the target image on the display area.

The specific implementation of the above operations can be found in the previous embodiments, which will not be described in detail here.

The storage medium may include: a read-only memory (ROM), a random access memory (RAM), a magnetic disk or an optical disk, etc.

Since the instructions stored in the storage medium can execute the steps in any image display method provided in the embodiments of the present application, the beneficial effects that can be achieved by any image display method provided in the embodiments of the present application can be achieved. Please refer to the previous embodiments for details and will not be repeated here.

The above is a detailed introduction to an image display method, device, electronic device and storage medium provided in some embodiments of the present application. Specific examples are used in this article to illustrate the principles and implementation methods of the present application. The description of the above embodiments is only used to help understand the method of the present application and its core idea; at the same time, for technical personnel in this field, according to the ideas of the present application, there will be changes in the specific implementation methods and application scopes. In summary, the content of this specification should not be understood as a limitation on the present application.

### FURTHER EXAMPLES OF THE DISCLOSURE

1. A image display method, comprising:
   acquiring panoramic image data and displaying a default image corresponding to a default direction according to the panoramic image data;
   in response to a direction selection operation corresponding to a target image, determining a target direction corresponding to the target image;
   determining the target image in the panoramic image data according to the target direction; and
   displaying the target image on a display area.
2. The image display method according to further example 1, wherein the, in response to the input direction selection operation corresponding to the target image, determining the target direction corresponding to the target image comprises:
   obtaining direction vector data corresponding to the direction selection operation;
   converting the direction vector data into Euler angle data; and
   determining the target direction according to the Euler angle data.
3. The image display method according to further example 2, wherein the determining the target direction according to the Euler angle data comprises:
   determining a center point of a space and establishing a three-dimensional space, wherein a position of the center point of the space in the three-dimensional space corresponds to a position of a recording device that photographs the panoramic image data in a real three-dimensional space;
   determining the target direction in the three-dimensional space according to the Euler angle data.
4. The image display method according to further example 3, wherein the determining the target image corresponding to the target direction according to the panoramic image data comprises:
   mapping the panoramic image data in the three-dimensional space to obtain a panoramic three-dimensional space containing a panoramic image; and
   determining the target image in the panoramic three-dimensional space according to the target direction.
5. The image display method according to further example 4, wherein the determining the target image in the panoramic image data according to the target direction comprises:
   determining a viewing angle and a viewing distance corresponding to the target direction;
   cutting out a cropped image from the panoramic image in the panoramic three-dimensional space according to the viewing angle and the viewing distance;
   projecting the cropped image to obtain the target image.
6. The image display method according to any one of further examples 1 to 5, wherein the displaying the target image on the display area comprises:
   determining a display position corresponding to the target image; and
   displaying the target image on the display area according to the display position.
7. The image display method according to further example 6, wherein the determining the display position corresponding to the target image comprises:
   acquiring a relative position of the target image with respect to the default image;
   determining the display position corresponding to the target image on the default image according to the relative position.
8. A image display device, comprising:
   an acquisition module, configured to acquire panoramic image data, and display a default image corresponding to a default direction according to the panoramic image data;
   a first determination module, configured to determine a target direction corresponding to the target image in response to an input direction selection operation corresponding to the target image;
   a second determination module, configured to determine the target image in the panoramic image data according to the target direction; and
   a display module, configured to display the target image in the display area.
9. An electronic device, comprising:
   a memory storing executable program code, and a processor coupled to the memory;
   wherein the processor calls the executable program code stored in the memory to execute the steps in the image display method according to any one of further examples 1 to 7.
10. A storage medium, wherein the storage medium stores a plurality of instructions, wherein the instructions are suitable for being loaded by a processor to execute the steps of the image display method according to any one of further examples 1 to 7.

END OF FURTHER EXAMPLES OF THE DISCLOSURE

## Claims

1. An image display method, comprising:
acquiring a default image corresponding to a default direction, wherein the default image corresponds to at least a part of panoramic image data, and the panoramic image data is acquired by an unmanned aerial vehicle (UAV);
determining a target direction corresponding to a direction selection operation;
simultaneously displaying the default image and a target image corresponding to the target direction on a display area, wherein the target image corresponds to at least a part of the panoramic image data;
wherein the default direction includes at least one of the following: a pre-specified direction, or a flight direction of the UAV.

2. The image display method according to claim 1, wherein the simultaneously displaying the default image and a target image corresponding to the target direction on a display area, comprises:
during acquisition of the panoramic image data by the UAV or when previewing the panoramic image data, simultaneously displaying the default image and the target image corresponding to the target direction on the display area, to preview the default image and the target image.

3. The image display method according to claim 1, wherein the determining a target direction corresponding to a direction selection operation, comprises:
displaying the default image; in response to the direction selection operation, determining the target direction corresponding to the direction selection operation;
or,
inputting the direction selection operation through a handle or a virtual controller;
determining the target direction corresponding to the direction selection operation.

4. The image display method according to claim 3, wherein the determining the target direction corresponding to the direction selection operation, comprises:
obtaining direction vector data corresponding to the direction selection operation;
determining the target direction according to the direction vector data.

5. The image display method according to claim 1, wherein the target image is displayed in a small window on the display area; and/or the default image is displayed in full image on the display area; and/or the target image and the default image are displayed on respective display areas.

6. The image display method according to claim 1, wherein the simultaneously displaying the default image and a target image corresponding to the target direction on a display area, comprises:
acquiring the target image corresponding to the target direction;
simultaneously displaying the default image and the target image on the display area.

7. An image display device, comprising:
a first acquisition module, configured to acquire a default image corresponding to a default direction, wherein the default image corresponds to at least a part of panoramic image data, and the panoramic image data is acquired by an UAV;
a determination module, configured to determine a target direction corresponding to a direction selection operation;
a display module, configured to simultaneously display the default image and a target image corresponding to the target direction on a display area, wherein the target image corresponds to at least a part of the panoramic image data;
wherein the default direction includes at least one of the following: a pre-specified direction, or a flight direction of the UAV.

8. The image display device according to claim 7, wherein the display module is specifically configured to:
during acquisition of the panoramic image data by the UAV or when previewing the panoramic image data, simultaneously display the default image and the target image corresponding to the target direction on the display area, to preview the default image and the target image; or, display the target image in a small window on the display area.

9. The image display device according to claim 7, wherein the determination module is specifically configured to: display the default image; in response to the direction selection operation, determine the target direction corresponding to the direction selection operation;
or, input the direction selection operation through a handle or a virtual controller; determine the target direction corresponding to the direction selection operation.

10. The image display device according to claim 9, wherein the determination module is specifically configured to:
determine direction vector data corresponding to the direction selection operation;
determine the target direction according to the direction vector data.

11. The image display device according to claim 7, wherein the display module is specifically configured to:
display the target image in a small window on the display area; and/or,
display the default image in full image on the display area; and/or,
display the target image and the default image on respective display areas.

12. The image display device according to claim 7, wherein a communication module is further configured to: acquire the target image corresponding to the target direction.

13. An unmanned aerial vehicle (UAV), comprising:
an acquisition module, configured to acquire panoramic image data, wherein the acquisition module comprises a panoramic camera, and the panoramic camera is configured to capture a panoramic image in a three-dimensional or stereoscopic space;
a second communication module, configured to send a default image corresponding to a default direction, wherein the default image corresponds to at least a part of the panoramic image data, the default image and a target image corresponding to a target direction are simultaneously displayed on a display area of a display device, the target image corresponds to at least a part of the panoramic image data;
wherein the default direction includes at least one of the following: a pre-specified direction, or a flight direction of the UAV.

14. The UAV according to claim 13, wherein the acquisition module is further configured to acquire spatial angle information corresponding to when the UAV acquires the panoramic image;
wherein the spatial angle information includes direction information or Euler angle information; or, the spatial angle information is used to confirm the default direction.

15. An image display system, comprising:
an UAV, comprising an acquisition module and a second communication module, wherein,
the acquisition module is configured to acquire panoramic image data, wherein the acquisition module comprises a panoramic camera, and the panoramic camera is configured to capture a panoramic image in a stereoscopic space;
the second communication module is configured to send a default image corresponding to a default direction, wherein the default image corresponds to at least a part of the panoramic image data;
an image display device, comprising a first acquisition module, a determination module and a display module, wherein,
the first acquisition module is configured to acquire the default image;
the determination module is configured to determine a target direction corresponding to a direction selection operation;
the display module is configured to simultaneously display the default image and a target image corresponding to the target direction on a display area, wherein the target image corresponds to at least a part of the panoramic image data;
the default direction includes at least one of the following: a pre-specified direction, or a flight direction of the UAV.
